# EUROPÄISCHE PATENTSCHRIFT

(11) **EP 2 713 229 B1**
(45) Veröffentlichungstag und Bekanntmachung des Hinweises auf die Patenterteilung: **08.11.2017**
(21) Anmeldenummer: 13183908.6
(22) Anmeldetag: 11.09.2013
(51) Int. Cl.: G05B 19/418, H04L 12/28, H04L 29/08, H04L 12/24, H04L 12/26

(54) **VERFAHREN ZUR ÜBERTRAGUNG VON ADRESS-, DIAGNOSE- UND/ODER KONFIGURATIONSINFORMATIONEN, INFRASTRUKTURGERÄT UND DIAGNOSEGERÄT**
METHOD FOR TRANSMISSION OF ADDRESS, DIAGNOSIS AND/OR CONFIGURATION INFORMATION, INFRASTRUCTURE APPARATUS AND DIAGNOSTIC APPARATUS
PROCÉDÉ DE TRANSMISSION D'INFORMATIONS D'ADRESSE, DE DIAGNOSTIC ET/OU DE CONFIGURATION, APPAREIL D'INFRASTRUCTURE ET APPAREIL DE DIAGNOSTIC

(30) Priorität: 26.09.2012 EP 12186084; 02.10.2012 EP 12186975
(43) Veröffentlichungstag der Anmeldung: 02.04.2014
(73) Patentinhaber: Siemens Aktiengesellschaft, 80333 München (DE)
(72) Erfinder: Köpke, Andreas, 91052 Erlangen (DE); Richter, Siegfried, 91207 Lauf (DE)

(56) Entgegenhaltungen:
- DE-A1- 10 110 776
- DE-A1-102011 086 678
- DE-U1-202011 107 014

## Beschreibung

Die vorliegende Erfindung betrifft eine Übertragung von Adreß-, Diagnose und/oder Konfigurationsinformationen zwischen einem an ein Kommunikationsnetz angeschlossenen Infrastrukturgerät und einem Diagnosegerät, insbesondere in einem industriellen Automatisierungssystem. Ein industrielles Automatisierungssystem umfaßt üblicherweise eine Vielzahl von über ein industrielles Kommunikationsnetz miteinander vernetzten Automatisierungsgeräten und dient im Rahmen einer Fertigungs- oder Prozeßautomatisierung zur Steuerung oder Regelung von Anlagen, Maschinen bzw. Geräten. Aufgrund zeitkritischer Rahmenbedingungen in mittels industrieller Automatisierungssysteme automatisierten technischen Systemen werden in industriellen Kommunikationsnetzen zur Kommunikation zwischen Automatisierungsgeräten überwiegend Echzeit-Kommunikationsprotokolle, wie Profinet, Profibus oder Real-Time-Ethernet, verwendet.

An Kommunikationsgeräten, Automatisierungsgeräten mit Kommunikationsnetzschnittstelle oder sonstigen Infrastrukturgeräten sind üblicherweise Leuchtdioden zur Signalisierung von Zustands- oder Fehlerinformationen gut sichtbar auf einer Vorderseite vorgesehen. Die Signalisierung kann dabei beispielsweise farblich oder durch Blinken mit einer bestimmten Frequenz erfolgen. Vielfach ist eine solche Signalisierung interpretationsbedürftig und ohne eine geräteindividuelle technische Dokumentation äußerst schwierig. Zur eingehenden Diagnose von signalisierten Zustands- oder Fehlerinformationen, insbesondere zur Vermeidung von Stillstandszeiten in technischen Anlagen, werden häufig rechnerbasierte Diagnosegeräte verwendet, die mit einem zu überwachenden Infrastrukturgerät gekoppelt werden. Bei einer großen Anzahl von Leuchtdioden an einem Infrastrukturgerät ist eine automatische Erfassung und Auswertung von signalisierten Zustands- oder Fehlerinformationen durch ein Diagnosegerät problematisch. Um eine Störung durch benachbarte Leuchtdioden zu vermeiden, muß eine Abtasteinheit des Diagnosegeräts nämlich genau auf eine zu überwachende Leuchtdiode ausgerichtet werden.

Alternativ zu einer Signalisierung von Zustands- oder Fehlerinformationen mittels Leuchtdioden werden hierfür zunehmend auch kleine Displays an Infrastrukturgeräten verwendet, die eine Darstellung aussagekräftigerer Informationen ermöglichen. Auf solchen Displays kann beispielsweise eine IP-Adresse eines Infrastrukturgeräts dargestellt werden, so daß ein Diagnosegerät anhand der IP-Adresse eine Verbindung zum Infrastrukturgerät aufbauen kann. Zustands- und Fehlerinformationen oder IP-Adressen können grundsätzlich auch per Infrarotschnittstelle zwischen einem Infrastrukturgerät und einem Diagnosegerät ausgetauscht werden. Problematisch bei Verwendung einer Infrarotschnittstelle ist jedoch, daß eine ungestörte Sichtverbindung zwischen einem Empfänger am Diagnosegerät und einem Sender am Infrastrukturgerät erforderlich ist. Insbesondere in großen technischen Anlagen ist dies nicht immer gewährleistet. Darüber hinaus kann eine IP-Adresse an einem Infrastrukturgerät auch durch ein Schild mit einer Klartextangabe oder einem Strichcode dargestellt werden. Bei beengten Platzverhältnissen sind jedoch Zuordnung des Schildes zu einem Infrastrukturgerät und Lesbarkeit des Schildes problematisch, insbesondere bei schwachem Licht oder Reflexionen.

Aus DE 101 10 776 A1 ist ein Verfahren bekannt, das zur Zuordnung einer mobilen elektronischen Bedien- bzw. Beobachtungseinrichtung zu einer Maschine oder einem Maschinenteil dient. Dabei wird in einem Zuordnungs- bzw. Anmeldeprozeß zwischen der Bedien- bzw. Beobachtungseinrichtung und einer korrespondierenden Gegensteile an der jeweiligen Maschine mittels Schnittstellen zur gerichteten drahtlosen Anpeilung der korrespondierenden Gegenstelle eine eindeutige Zuordnungs- bzw. Anmeldeverbindung aufgebaut. Alternativ dazu kann mittels in Sendereichweite bzw. Empfangsempfindlichkeit abgestimmten Sende- bzw. Empfangseinrichtungen mit einem begrenzten örtlichen Funktions- bzw. Wirkungsbereich eine eindeutige Zuordnungs- bzw. Anmeldeverbindung aufgebaut werden. Nach erkannter und erfolgter Zuordnung wird eine Bedienung bzw. Beobachtung der Maschine bzw. des Maschinenteils über ein anderes standardmäßig vorgesehenes Datenübertragungsmittel vorgenommen. Dies kann beispielsweise über eine feste Vernetzung bzw. über eine drahtlose Verbindung zwischen der Bedien- bzw. Beobachtungseinrichtung und der ausgewählten Maschine erfolgen. Aus DE102011086678 A1 offenbart eine automatische Vorrichtungsverbindung oder -paarung durch Zugreifen auf oder Erfassen eines maschinenlesbaren Merkmals. Der vorliegenden Erfindung liegt daher die Aufgabe zugrunde, ein zuverlässiges und einfach auszuführendes Verfahren zur Übertragung von Adreß-, Diagnose- bzw. Konfigurationsinformationen zwischen einem an ein Kommunikationsnetz angeschlossenen Infrastrukturgerät und einem Diagnosegerät zu schaffen sowie ein geeignetes Infrastruktur bzw. Diagnosegerät anzugeben.

Diese Aufgabe wird erfindungsgemäß durch ein Verfahren mit den in Patentanspruch 1 angegebenen Merkmalen, durch ein Infrastrukturgerät mit den in Patentanspruch 16 angegebenen Merkmalen und durch ein Diagnosegerät mit den in Patentanspruch 17 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren Übertragung von Adreß-, Diagnose bzw. Konfigurationsinformationen zwischen einem an ein Kommunikationsnetz angeschlossenen Infrastrukturgerät und einem Diagnosegerät sind die Adreß-, Diagnose- bzw. Konfigurationsinformationen dem an das Kommunikationsnetz angeschlossenen Infrastrukturgerät zugeordnet. Das Infrastrukturgerät kann beispielsweise ein Router, ein Switch, eine Bridge, ein Hub, ein dezentrales Peripheriegerät eines industriellen Automatisierungssystems oder Automatisierungsgerät mit Kommunikationsnetzschnittstelle, ein Anzeigegerät, ein Eingabegerät oder ein Drucker sein. Des weiteren kann das Diagnosegerät beispielsweise ein portabler Computer, ein Tablet-PC oder ein Smartphone sein. Mittels mehrerer Leuchtdioden am Infrastrukturgerät werden Geräte- oder Kommunikationsstatusinformationen des Infrastrukturgeräts signalisiert.

Erfindungsgemäß werden die Adreß-, Diagnose- bzw. Konfigurationsinformationen als überlagerte codierte Symbolsequenz bzw. als amplituden-, frequenz- bzw. phasenmoduliertes überlagertes Signal durch zumindest eine vorgegebene Leuchtdiode zusätzlich zu angezeigten Geräte- oder Kommunikationsstatusinformationen signalisiert. Vorzugsweise wird die codierte Symbolsequenz durch Blinkcodes bzw. das überlagerte Signal außerhalb eines für menschliche Augen wahrnehmbaren Frequenzspektrums bzw. unter Erhaltung eines Informationsgehalts der signalisierten Geräte- oder Kommunikationsstatusinformationen mittels der zumindest einen vorgegeben Leuchtdiode am Infrastrukturgerät signalisiert. Die Leuchtdioden am Infrastrukturgerät werden durch das Diagnosegerät mittels einer Kamera optisch abgetastet. Die zumindest eine vorgegebene Leuchtdiode, welche die Adreß-, Diagnose- bzw. Konfigurationsinformationen signalisiert, wird anhand einer Codierung der die Adreß-, Diagnose- bzw. Konfigurationsinformationen umfassenden Symbolsequenz bzw. einer Modulierung des überlagerten Signals durch das Diagnosegerät identifiziert. Die zumindest eine identifizierte Leuchtdiode wird dann mittels der Kamera des Diagnosegeräts optisch abgetastet. Abschließend werden die Adreß-, Diagnose- bzw. Konfigurationsinformationen aus einer abgetasteten codierten Symbolsequenz bzw. einem überlagerten Signal durch das Diagnosegerät ermittelt.

Aufgrund einer automatisierten Identifikation der zumindest einen vorgegebene Leuchtdiode, welche die Adreß-, Diagnose- bzw. Konfigurationsinformationen des Infrastrukturgeräts signalisiert, können Störungen oder falsche Zuordnungen bei einer Erfassung der Adreß-, Diagnose- bzw. Konfigurationsinformationen erfindungsgemäß vermieden werden. Entsprechend einer bevorzugten Weiterbildung der vorliegenden Erfindung werden Leuchtdioden des Infrastrukturgeräts, die Adreß-, Diagnose- bzw. Konfigurationsinformationen signalisieren, an einer Anzeigeeinheit des Diagnosegeräts, beispielsweise an einem Touchscreen, selektierbar dargestellt. Dabei wird eine auf eine Benutzerauswahl selektierte Leuchtdiode zur Ermittlung der Adreß-, Diagnose- bzw. Konfigurationsinformationen mittels der Kamera des Diagnosegeräts optisch abgetastet.

Des weiteren ermöglicht das erfindungsgemäße Verfahren eine von Umgebungslichteinflüssen unabhängige Erfassung der Adreß-, Diagnose- bzw. Konfigurationsinformationen des Infrastrukturgeräts. Die zumindest eine Leuchtdiode zur Signalisierung der Adreß-, Diagnose- bzw. Konfigurationsinformationen ist nämlich ein aktives Signalisierungselement, das insbesondere bei wenig Licht, beispielsweise in einem Schaltschrank, besonders gut durch das Diagnosegerät selektierbar ist. Darüber hinaus ist das erfindungsgemäße Verfahren einfach für bestehende Infrastrukturgeräte anwendbar, da lediglich eine Ansteuerung zumindest einer Leuchtdiode zur Darstellung der Adreß-, Diagnose- bzw. Konfigurationsinformationen als überlagerte codierte Symbolsequenz bzw. überlagertes moduliertes Signal zu modifizieren ist. Des weiteren läßt sich die überlagerte codierte Symbolsequenz bzw. das überlagerte modulierte Signal unkompliziert mittels eines allgemein verfügbaren Geräts wie Tablet-PC oder Smartphone und einer auf diesem ablaufenden Applikation zur Ermittlung der Adreß-, Diagnose- bzw. Konfigurationsinformationen decodieren. Auf einem solchen Gerät können auch umfangreichere Handlungsanweisungen zur Problembehebung dargestellt werden, ohne daß Service-Mitarbeiter umfangreiche druckschriftliche technische Dokumentationen mit sich führen müssen. Insbesondere können am Diagnosegerät dargestellte Handlungsanweisung exakt in bezug auf ein bestehendes Problem am Infrastrukturgerät eingeschränkt werden, so daß eine schnelle und einfachere Problembehebung ermöglicht wird. Dies erlaubt insbesondere in industriellen Automatisierungssystemen eine signifikante Minimierung von Stillstandszeiten.

Entsprechend einer vorteilhaften Ausgestaltung des erfindungsgemäßen Verfahrens umfassen die Adreß-, Diagnose- bzw. Konfigurationsinformationen in einem Fehlerzustand des Infrastrukturgeräts eine Adreßangabe, insbesondere einen Uniform Ressource Locator, zum Zugriff auf einen Diagnose- bzw. Fehlerbehebungsinformationen bereitstellenden Server. Dies ermöglicht eine schnelle Diagnose bzw. Fehlerbehebung. In entsprechender Weise können die Adreß-, Diagnose- bzw. Konfigurationsinformationen während einer Inbetriebnahme des Infrastrukturgeräts eine Adreßangabe zum Zugriff auf einen Server umfassen, der Bearbeitungsmittel für konfigurierbare Parameter des Infrastrukturgeräts bereitstellt, beispielsweise eine Webseite mit Konfigurationseinstellungen für das Infrastrukturgerät. Dies ermöglicht eine schnelle und effiziente Inbetriebnahme eines Infrastrukturgeräts.

Die Adreß-, Diagnose- bzw. Konfigurationsinformationen können entsprechend einer weiteren vorteilhaften Ausgestaltung der vorliegenden Erfindung jeweils als überlagerte codierte Symbolsequenz bzw. als überlagertes moduliertes Signal durch zumindest zwei vorgegebene Leuchtdioden synchron signalisiert werden. Dabei werden die zumindest zwei vorgegeben Leuchtdioden, welche die Adreß-, Diagnose- bzw. Konfigurationsinformationen signalisieren, anhand synchroner überlagerter Blinkcodes bzw. überlagerter modulierter Signale identifiziert. Dies ermöglicht eine zuverlässige und schnelle Identifikation von Adreß-, Diagnose- bzw. Konfigurationsinformationen signalisierenden Leuchtdioden. Vorzugsweise sind die zumindest zwei vorgegeben Leuchtdioden am Infrastrukturgerät benachbart angeordnet.

Darüber hinaus kann die Adreß-, Diagnose- bzw. Konfigurationsinformationen umfassende codierte Symbolsequenz mehrere Teilsequenzen aufweisen, die jeweils durch eine zugeordnete Leuchtdiode aus einer Gruppe von Leuchtdioden taktsynchron signalisiert werden. Dies ermöglicht eine Verkürzung einer Erfassungsdauer der durch die Gruppe von Leuchtdioden verteilt signalisierten Adreß-, Diagnose- bzw. Konfigurationsinformationen. Die Erfassungsdauer ist dabei umgekehrt proportional zur Anzahl von die Adreß-, Diagnose- bzw. Konfigurationsinformationen signalisierenden Leuchtdioden. Die Leuchtdioden der Gruppe von Leuchtdioden zur verteilten Signalisierung der codierten Symbolsequenz können beispielsweise anhand eines vorgegebenen Symbols identifiziert werden, das durch alle Leuchtdioden der Gruppe von Leuchtdioden taktsynchron signalisiert wird.

Entsprechend einer weiteren vorteilhaften Ausgestaltung wird durch alle Leuchtdioden der Gruppe von Leuchtdioden ein Symbol signalisiert, das eine Information über eine Anzahl von Leuchtdioden bzw. Teilsequenzen zur verteilten Signalisierung der codierten Symbolsequenz umfaßt. Damit kann sichergestellt werden, daß sämtliche relevanten Leuchtdioden für eine Ermittlung der Adreß-, Diagnose- bzw. Konfigurationsinformationen durch das Diagnosegerät abgetastet werden. Vorzugsweise überprüft hierzu das Diagnosegerät anhand der Information über die Anzahl von Leuchtdioden bzw. Teilsequenzen zur verteilten Signalisierung der codierten Symbolsequenz eine vollständige Identifizierung aller Leuchtdioden, die zur verteilten Signalisierung der codierten Symbolsequenz verwendet werden.

Darüber hinaus wird entsprechend einer weiteren vorteilhaften Ausgestaltung des erfindungsgemäßen Verfahrens durch alle Leuchtdioden der Gruppe von Leuchtdioden ein Symbol signalisiert, das eine Information über eine Reihenfolge oder Wertigkeit der durch die jeweilige Leuchtdiode signalisierten Teilsequenz innerhalb der codierten Symbolsequenz umfaßt. Vorzugsweise setzt das Diagnosegerät anhand der Information über die Reihenfolge oder Wertigkeit der jeweiligen Teilsequenz die codierte Symbolsequenz aus den signalisierten Teilsequenzen zusammen. Damit ist gewährleistet, daß die aus den Teilsequenzen zusammengesetzte codierte Symbolsequenz für eine Ermittlung der Adreß-, Diagnose- bzw. Konfigurationsinformationen korrekt decodiert wird.

Das erfindungsgemäße Infrastrukturgerät umfaßt eine Kommunikationsnetzschnittstelle, eine Speichereinheit für Adreß-, Diagnose- bzw. Konfigurationsinformationen und zumindest eine Leuchtdiode zur Signalisierung von Geräte- oder Kommunikationsstatusinformationen und von Adreß-, Diagnose- bzw. Konfigurationsinformationen als überlagerte codierte Symbolsequenz bzw. als amplituden-, frequenz- bzw. phasenmoduliertes überlagertes Signal. Dabei ist das erfindungsgemäße Infrastrukturgerät zur Durchführung eines vorangehend beschriebenen Verfahrens ausgestaltet und eingerichtet ist. Korrespondierend dazu umfaßt das erfindungsgemäße Diagnosegerät zumindest eine Kamera zur optischen Abtastung von codierten Symbolsequenzen bzw. amplituden-, frequenz- bzw. phasenmodulierten überlagerten Signalen und eine Rechnereinheit zur Identifizierung und Decodierung von codierten Symbolsequenzen bzw. amplituden-, frequenz- bzw. phasenmodulierten überlagerten Signalen. Dabei ist das erfindungsgemäße Diagnosegerät zur Durchführung eines vorangehend beschriebenen Verfahrens ausgestaltet und eingerichtet ist.

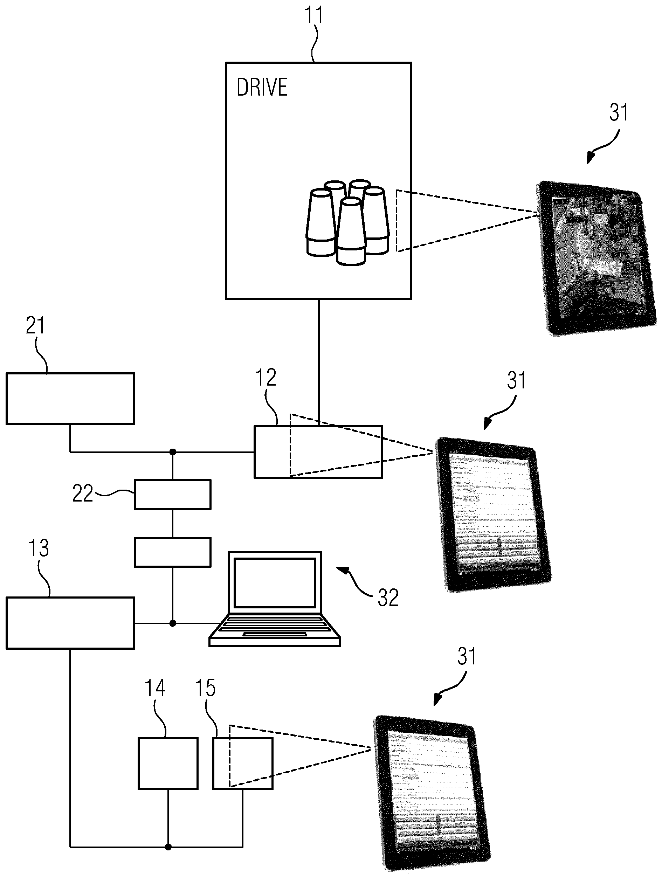

Die vorliegende Erfindung wird nachfolgend an einem Ausführungsbeispiel anhand der Zeichnung näher erläutert. Es zeigt die
- Figur: eine Anordnung mit mehreren Automatisierungsgeräten und Kommunikationsgeräten eines industriellen Automatisierungssystems sowie mit einem Diagnosegerät für eine Ermittlung von Adreß-, Diagnose- bzw. Konfugurationsinformationen.

Die in der Figur dargestellte Anordnung umfaßt mehrere miteinander vernetzte Komponenten eines industriellen Automatisierungssystems. Hierzu zählen als Infrastrukturgeräte eine durch eine erste speicherprogrammierbare Steuerung 12 überwachte und gesteuerte Maschine 12, ein mit der speicherprogrammierbaren Steuerung 12 verbundener Switch 21, ein mit dem Switch 21 verbundener Router 22 sowie eine zweite speicherprogrammierbare Steuerung 13. Der zweiten speicherprogrammierbaren Steuerung 13 sind zwei dezentrale Peripheriegeräte 14, 15 als weitere Infrastrukturgeräte zugeordnet, die mit der zweiten speicherprogrammierbaren Steuerung 13 über ein industrielles Kommunikationsnetz verbunden sind. Neben dem Switch 21 sind mit dem Router 22 die zweite speicherprogrammierbare Steuerung 13 sowie ein Rechner 32 mit Bedien- und Beobachtungsfunktionen verbunden. Die Infrastrukturgeräte umfassen jeweils eine Kommunikationsnetzschnittstelle, eine Speichereinheit für Adreß-, Diagnose- bzw. Konfigurationsinformationen sowie zumindest eine Leuchtdiode zur Signalisierung von Geräte- oder Kommunikationsstatusinformationen und von Adreß-, Diagnose- bzw. Konfigurationsinformationen als überlagerte codierte Symbolsequenz. Alternativ oder zusätzlich ist auch eine Signalisierung der Adreß-, Diagnose- bzw. Konfigurationsinformationen als überlagertes amplituden-, frequenz- bzw. phasenmoduliertes überlagertes Signal möglich.

Als Diagnosegerät für die Infrastrukturgeräte ist im vorliegenden Ausführungsbeispiel ein Tablet-PC 31 vorgesehen, der für Infrastrukturgeräte, wie Router, Switches, Bridges, Hubs, dezentrale Peripheriegeräte, Automatisierungsgeräte mit Kommunikationsnetzschnittstelle, Anzeigegeräte, Eingabegeräte oder Drucker geeignet ist. Grundsätzlich könnte als Diagnosegerät auch ein portabler Computer oder ein Smartphone verwendet werden. Ein Diagnosegerät umfaßt allgemein zumindest einer Kamera zur optischen Abtastung von codierten Symbolsequenzen bzw. überlagerten modulierten Signalen sowie eine Rechnereinheit zur Identifizierung und Decodierung von codierten Symbolsequenzen bzw. überlagerten modulierten Signalen. Gängige Tablet-PCs oder Smartphones erlauben Kameraaufnahmen mit einer Bildfrequenz zwischen 25 und 60 Bilder pro Sekunde. Dies ist für eine Anwendung eines nachfolgend beschriebenen Verfahrens zur Übertragung von Adreß-, Diagnose- bzw. Konfigurationsinformationen absolut ausreichend und ermöglicht sogar eine Erfassung von IPv6-Adressen innerhalb weniger Sekunden.

Zur Übertragung von Adreß-, Diagnose- bzw. Konfigurationsinformationen von einem an ein Kommunikationsnetz angeschlossenen Infrastrukturgerät an Diagnosegerät werden die Adreß-, Diagnose- bzw. Konfigurationsinformationen als überlagerte codierte Symbolsequenz bzw. als überlagertes moduliertes Signal durch zumindest eine vorgegebene Leuchtdiode zusätzlich zu angezeigten Geräte- oder Kommunikationsstatusinformationen signalisiert. Vorzugsweise wird die codierte Symbolsequenz durch Blinkcodes bzw. das überlagerte modulierte Signal außerhalb eines für menschliche Augen wahrnehmbaren Frequenzspektrums mittels der zumindest einen vorgegeben Leuchtdiode am Infrastrukturgerät signalisiert. Grundsätzlich ist auch eine Signalisierung innerhalb des für menschliche Augen wahrnehmbaren Frequenzspektrums möglich. Dabei sollte jedoch ein Informationsgehalt der primär signalisierten Geräte- oder Kommunikationsstatusinformationen erhalten bleiben.

Die Leuchtdioden am Infrastrukturgerät werden durch das Diagnosegerät mittels einer eingebauten Kamera optisch abgetastet. Anhand einer Codierung der die Adreß-, Diagnose- bzw. Konfigurationsinformationen umfassenden Symbolsequenz bzw. anhand einer Modulierung des überlagerten Signals wird die zumindest eine vorgegebene Leuchtdiode, welche die Adreß-, Diagnose- bzw. Konfigurationsinformationen signalisiert, durch das Diagnosegerät identifiziert. Danach wird die zumindest eine identifizierte Leuchtdiode mittels der Kamera des Diagnosegeräts optisch abgetastet, so daß nachfolgend die Adreß-, Diagnose- bzw. Konfigurationsinformationen aus einer abgetasteten codierten Symbolsequenz bzw. aus einem überlagerten modulierten Signal durch das Diagnosegerät ermittelt werden können.

Entsprechend dem in der Figur dargestellten Ausführungsbeispiel wird mittels der Kamera des Tablet-PC 31 u.a. eine Leuchtdiode an der Maschine 11 erfaßt, die eine Fehlermeldung signalisiert, der eine Adreß-, Diagnose- bzw. Konfigurationsinformationen umfassende codierte Symbolsequenz überlagert ist. Durch das Diagnosegerät wird diese Symbolsequenz zur Ableitung der Adreß-, Diagnose- bzw. Konfigurationsinformationen decodiert. Die Adreß-, Diagnose- bzw. Konfigurationsinformationen umfassen im vorliegenden Ausführungsbeispiel ergänzende Informationen zur Fehlermeldung, die auf einem Touch-Display am Tablet-PC 31 dargestellt werden. Hierzu ist auf dem Tablet-PC eine Kontroll-App installiert, die auch eine Touch-Auswahl einer zu erfassenden Leuchtdiode mittels eines Kamera-Sucherbilds am Touch-Display ermöglicht, falls an einem Infrastrukturgerät mehrere Leuchtdioden vorhanden sind. Dabei werden im Kamera-Sucherbild die Leuchtdioden markiert, die Adreß-, Diagnose- bzw. Konfigurationsinformationen signalisieren. Falls nur eine Leuchtdiode detektiert wird, die Adreß-, Diagnose- bzw. Konfigurationsinformationen signalisiert, kann automatisch eine Decodierung ohne Benutzerauswahl einer zu erfassenden Leuchtdiode gestartet werden.

Bei mehreren Leuchtdioden in einem Sucherbereich Kamera des Tablet-PC 31 können diejenigen Leuchtdioden per Touch-Eingabe selektiert werden, die für eine Decodierung berücksichtigt werden sollen. Eine vereinfachte Selektion kann beispielsweise mittels einer Zoom-Funktion erfolgen. Vorzugsweise umfaßt die auf dem Tablet-PC installierte Kontroll-App auch eine Funktion für eine automatische Verfolgung einer für eine Decodierung selektierten Leuchtdiode. Damit können Bewegungen des Tablet-PC ausgeglichen werden. Während des Decodierens wird am Touch-Display des Tablet-PC vorteilhafterweise ein Bearbeitungsfortschritt visualisiert. Nach Abschluß der Decodierung ruft die auf dem Tablet-PC installierte Kontroll-App eine Web-Seite mit weiterführenden Diagnoseinformationen auf. Alternativ dazu kann die Kontroll-App auch eine verknüpfte Diagnose-App aufrufen.

Mittels der Kamera des Tablet-PC 31 kann auch eine Leuchtdiode an der ersten speicherprogrammierbaren Steuerung 12 erfaßt werden, die einen Stopzustand einer Zentraleinheit der ersten speicherprogrammierbaren Steuerung 12 und eine überlagerte codierte Symbolsequenz mit Adreßinformationen für eine Web-Seite zur Fehlerdiagnose signalisiert. In diesem Fall öffnet die auf dem Tablet-PC 31 installierte Kontroll-App eine der ersten speicherprogrammierbaren Steuerung 12 zugeordnete Web-Seite zur Fehlerdiagnose. In entsprechender Weise kann mittels des Tablet-PC 31 auch eine Leuchtdiode an einem dezentralen Peripheriegerät 15 erfaßt werden, die einen Stopzustand und eine überlagerte codierte Symbolsequenz mit Adreßinformationen zum dezentralen Peripheriegerät 15 signalisiert. Anhand dieser Adreßinformationen kann sich ein auf dem Tablet-PC installierte Projektierungssoftware, wie SIMATIC STEP 7, auf das dezentrale Peripheriegerät 15 zugreifen und eine Fehlerdiagnose liefern.

In einem Fehlerzustand eines Infrastrukturgeräts umfassen die Adreß-, Diagnose- bzw. Konfigurationsinformationen entsprechend einem bevorzugten Ausführungsbeispiel eine Adreßangabe, beispielsweise einen Uniform Ressource Locator (URL), zum Zugriff auf einen Diagnose- bzw. Fehlerbehebungsinformationen bereitstellenden Server. Analog dazu können die Adreß-, Diagnose- bzw. Konfigurationsinformationen während einer Inbetriebnahme eines Infrastrukturgeräts eine Adreßangabe zum Zugriff auf einen Server umfassen, der eine Konfigurationsumgebung für das jeweilige Infrastrukturgerät bereitstellt.

Die Adreß-, Diagnose- bzw. Konfigurationsinformationen können jeweils als überlagerte codierte Symbolsequenz durch zwei benachbarte Leuchtdioden synchron signalisiert werden. Diese Leuchtdioden können schnell und zuverlässig anhand synchroner überlagerter Blinkcodes identifiziert werden.

Zur Verkürzung einer Erfassungsdauer ist die Adreß-, Diagnose- bzw. Konfigurationsinformationen umfassende codierte Symbolsequenz in mehrere Teilsequenzen untergliedert, die jeweils unabhängig voneinander durch separate Leuchtdioden taktsynchron signalisiert werden. Eine diese Leuchtdioden umfassende Gruppe von Leuchtdioden zur verteilten Signalisierung der codierten Symbolsequenz kann beispielsweise anhand eines vorgegebenen Symbols identifiziert werden, das durch alle Leuchtdioden der Gruppe von Leuchtdioden taktsynchron signalisiert wird. Vorteilhafterweise wird zusätzlich durch alle Leuchtdioden der Gruppe von Leuchtdioden ein Symbol signalisiert, das eine Information über eine Anzahl von Leuchtdioden bzw. Teilsequenzen zur verteilten Signalisierung der codierten Symbolsequenz umfaßt. Anhand dieser kann das Diagnosegerät eine vollständige Identifizierung aller Leuchtdioden verifizieren, die zur verteilten Signalisierung der codierten Symbolsequenz verwendet werden.

Bei verteilter Signalisierung der codierten Symbolsequenz wird durch alle Leuchtdioden der Gruppe von Leuchtdioden vorzugsweise jeweils zusätzlich ein Symbol signalisiert, das eine Information über eine Reihenfolge oder Wertigkeit der durch die jeweilige Leuchtdiode signalisierten Teilsequenz innerhalb der codierten Symbolsequenz umfaßt. Anhand dieser Information kann das Diagnosegerät die codierte Symbolsequenz aus den signalisierten Teilsequenzen zusammensetzen. Der Schutzbereich der Erfindung wird durch die Ansprüche definiert.

## Patentansprüche

1. Verfahren zur Übertragung von Adreß-, Diagnose- und/oder Konfigurationsinformationen zwischen einem an ein Kommunikationsnetz angeschlossenen Infrastrukturgerät (12, 13, 14, 15) und einem Diagnosegerät (31), bei dem
- die Adreß-, Diagnose- und/oder Konfigurationsinformationen dem an das Kommunikationsnetz angeschlossenen Infrastrukturgerät zugeordnet sind,
- Geräte- oder Kommunikationsstatusinformationen des Infrastrukturgeräts mittels mehrerer Leuchtdioden am Infrastrukturgerät signalisiert werden,
- die Adreß-, Diagnose- und/oder Konfigurationsinformationen als überlagerte codierte Symbolsequenz und/oder als amplituden-, frequenz- und/oder phasenmoduliertes überlagertes Signal durch zumindest eine vorgegebene Leuchtdiode zusätzlich zu angezeigten Geräte- oder Kommunikationsstatusinformationen signalisiert werden,
- die Leuchtdioden am Infrastrukturgerät durch das Diagnosegerät mittels einer Kamera optisch abgetastet werden,
- die zumindest eine vorgegebene Leuchtdiode, welche die Adreß-, Diagnose- und/oder Konfigurationsinformationen signalisiert, anhand einer Codierung der die Adreß-, Diagnose- und/oder Konfigurationsinformationen umfassenden Symbolsequenz und/oder anhand einer Modulierung des überlagerten Signals durch das Diagnosegerät identifiziert wird,
- die zumindest eine identifizierte Leuchtdiode mittels der Kamera des Diagnosegeräts optisch abgetastet wird und die Adreß-, Diagnose- und/oder Konfigurationsinformationen aus einer abgetasteten codierten Symbolsequenz und/oder aus einem überlagerten modulierten Signal durch das Diagnosegerät ermittelt werden.

2. Verfahren nach Anspruch 1,
bei dem die codierte Symbolsequenz durch Blinkcodes und/oder das überlagerte modulierte Signal außerhalb eines für menschliche Augen wahrnehmbaren Frequenzspektrums und/oder unter Erhaltung eines Informationsgehalts der signalisierten Geräte- oder Kommunikationsstatusinformationen mittels der zumindest einen vorgegeben Leuchtdiode am Infrastrukturgerät signalisiert wird.

3. Verfahren nach einem der Ansprüche 1 oder 2,
bei dem die Adreß-, Diagnose- und/oder Konfigurationsinformationen in einem Fehlerzustand des Infrastrukturgeräts eine Adreßangabe, insbesondere einen Uniform Ressource Locator, zum Zugriff auf einen Diagnose- und/oder Fehlerbehebungsinformationen bereitstellenden Server umfassen.

4. Verfahren nach einem der Ansprüche 1 bis 3,
bei dem die Adreß-, Diagnose- und/oder Konfigurationsinformationen während einer Inbetriebnahme des Infrastrukturgeräts eine Adreßangabe, insbesondere einen Uniform Ressource Locator, zum Zugriff auf einen Server umfassen, der Bearbeitungsmittel für konfigurierbare Parameter des Infrastrukturgeräts bereitstellt.

5. Verfahren nach einem der Ansprüche 1 bis 4,
bei dem die Adreß-, Diagnose- und/oder Konfigurationsinformationen jeweils als überlagerte codierte Symbolsequenz und/oder als überlagertes moduliertes Signal durch zumindest zwei vorgegebene Leuchtdioden synchron signalisiert werden, und bei dem die zumindest zwei vorgegeben Leuchtdioden, welche die Adreß-, Diagnose- und/oder Konfigurationsinformationen signalisieren, anhand synchroner überlagerter Blinkcodes bzw. überlagerter modulierter Signale identifiziert werden.

6. Verfahren nach Anspruch 5,
bei dem die zumindest zwei vorgegeben Leuchtdioden am Infrastrukturgerät benachbart angeordnet sind.

7. Verfahren nach einem der Ansprüche 1 bis 4,
bei dem die Adreß-, Diagnose- und/oder Konfigurationsinformationen umfassende codierte Symbolsequenz mehrere Teilsequenzen aufweist, die jeweils durch eine zugeordnete Leuchtdiode aus einer Gruppe von Leuchtdioden taktsynchron signalisiert werden.

8. Verfahren nach Anspruch 7,
bei dem die Leuchtdioden der Gruppe von Leuchtdioden zur verteilten Signalisierung der codierten Symbolsequenz anhand eines vorgegebenen Symbols identifiziert werden, das durch alle Leuchtdioden der Gruppe von Leuchtdioden taktsynchron signalisiert wird.

9. Verfahren nach einem der Ansprüche 7 oder 8,
bei dem durch alle Leuchtdioden der Gruppe von Leuchtdioden ein Symbol signalisiert wird, das eine Information über eine Anzahl von Leuchtdioden und/oder Teilsequenzen zur verteilten Signalisierung der codierten Symbolsequenz umfaßt.

10. Verfahren nach Anspruch 9,
bei dem das Diagnosegerät anhand der Information über die Anzahl von Leuchtdioden und/oder Teilsequenzen zur verteilten Signalisierung der codierten Symbolsequenz eine vollständige Identifizierung aller Leuchtdioden überprüft, die zur verteilten Signalisierung der codierten Symbolsequenz verwendet werden.

11. Verfahren nach einem der Ansprüche 7 bis 10,
bei dem durch alle Leuchtdioden der Gruppe von Leuchtdioden ein Symbol signalisiert wird, das eine Information über eine Reihenfolge oder Wertigkeit der durch die jeweilige Leuchtdiode signalisierten Teilsequenz innerhalb der codierten Symbolsequenz umfaßt.

12. Verfahren nach Anspruch 11,
bei dem das Diagnosegerät anhand der Information über die Reihenfolge oder Wertigkeit der jeweiligen Teilsequenz die codierte Symbolsequenz aus den signalisierten Teilsequenzen zusammensetzt.

13. Verfahren nach einem der Ansprüche 1 bis 12,
bei dem an einer Anzeigeeinheit des Diagnosegeräts Leuchtdioden des Infrastrukturgeräts selektierbar dargestellt werden, die Adreß-, Diagnose- und/oder Konfigurationsinformationen signalisieren, und bei dem eine auf eine Benutzerauswahl selektierte Leuchtdiode zur Ermittlung der Adreß-, Diagnose- und/oder Konfigurationsinformationen mittels der Kamera des Diagnosegeräts optisch abgetastet wird.

14. Verfahren nach einem der Ansprüche 1 bis 13,
bei dem das Infrastrukturgerät ein Router, ein Switch, eine Bridge, ein Hub, ein dezentrales Peripheriegerät eines industriellen Automatisierungssystems oder Automatisierungsgerät mit Kommunikationsnetzschnittstelle, ein Anzeigegerät, ein Eingabegerät oder ein Drucker ist.

15. Verfahren nach einem der Ansprüche 1 bis 14,
bei dem das Diagnosegerät ein portabler Computer, ein Tablet-PC oder ein Smartphone ist.

16. Infrastrukturgerät (12, 13, 14, 15) mit
- einer Kommunikationsnetzschnittstelle,
- einer Speichereinheit für Adreß-, Diagnose- und/oder Konfigurationsinformationen,
- zumindest einer Leuchtdiode zur Signalisierung von Geräte- oder Kommunikationsstatusinformationen und von Adreß-, Diagnose- und/oder Konfigurationsinformationen als überlagerte codierte Symbolsequenz und/oder als amplituden-, frequenz- und/oder phasenmoduliertes überlagertes Signal,
wobei das Infrastrukturgerät (12, 13, 14, 15) zur Durchführung eines Verfahrens nach einem der Ansprüche 1 bis 15 ausgestaltet und eingerichtet ist.

17. Diagnosegerät (31) mit
- zumindest einer Kamera zur optischen Abtastung von codierten Symbolsequenzen und/oder amplituden-, frequenz- und/oder phasenmodulierten überlagerten Signalen,
- einer Rechnereinheit zur Identifizierung und Decodierung von codierten Symbolsequenzen und/oder amplituden-, frequenz- und/oder phasenmodulierten überlagerten Signalen,
wobei das Diagnosegerät (31) zur Durchführung eines Verfahrens nach einem der Ansprüche 1 bis 15 ausgestaltet und eingerichtet ist.

## Claims

1. Method for transmitting address, diagnosis and/or configuration information between an infrastructure device (12, 13, 14, 15), connected to a communication network, and a diagnosis device (31), in which
- the address, diagnosis and/or configuration information is associated with the infrastructure device connected to the communication network,
- device or communication status information of the infrastructure device is signalled by means of multiple light emitting diodes on the infrastructure device,
- the address, diagnosis and/or configuration information is signalled as an overlaid coded signal sequence and/or as an amplitude-modulated, frequency-modulated and/or phase-modulated overlaid signal by at least one prescribed light emitting diode in addition to displayed device or communication status information,
- the light emitting diodes on the infrastructure device are optically scanned by the diagnosis device by means of a camera,
- the at least one prescribed light emitting diode that signals the address, diagnosis and/or configuration information is identified via the diagnosis device on the basis of a coding of the symbol sequence comprising the address, diagnosis and/or configuration information and/or on the basis of a modulation of the overlaid signal,
- the at least one identified light emitting diode is optically scanned by means of the camera of the diagnosis device and the address, diagnosis and/or configuration information from a scanned coded symbol sequence and/or from an overlaid modulated signal is ascertained by the diagnosis device.

2. Method according to Claim 1,
in which the coded symbol sequence is signalled by means of the at least one prescribed light emitting diode on the infrastructure device by flash codes and/or the overlaid modulated signal outside a frequency spectrum perceptible to human eyes and/or by retaining information content of the signalled device or communication status information.

3. Method according to either of Claims 1 and 2,
in which the address, diagnosis and/or configuration information in a fault state of the infrastructure device comprises an address statement, particularly a uniform resource locator, for accessing a server providing diagnosis and/or fault correction information.

4. Method according to one of Claims 1 to 3,
in which the address, diagnosis and/or configuration information during startup of the infrastructure device comprises an address statement, particularly a uniform resource locator, for accessing a server that provides processing means for configurable parameters of the infrastructure device.

5. Method according to one of Claims 1 to 4,
in which the address, diagnosis and/or configuration information is respectively signalled as an overlaid coded symbol sequence and/or as an overlaid modulated signal in sync by at least two prescribed light emitting diodes, and in which the at least two prescribed light emitting diodes that signal the address, diagnosis and/or configuration information are identified on the basis of synchronous overlaid flash codes or overlaid modulated signals.

6. Method according to Claim 5,
in which the at least two prescribed light emitting diodes on the infrastructure device are arranged adjacently.

7. Method according to one of Claims 1 to 4,
in which the coded symbol sequence comprising address, diagnosis and/or configuration information has multiple subsequences that are respectively signalled in timing sync by an associated light emitting diode from a group of light emitting diodes.

8. Method according to Claim 7,
in which the light emitting diodes of the group of light emitting diodes are identified, for the purpose of distributed signalling of the coded symbol sequence, on the basis of a prescribed symbol that is signalled in timing sync by all the light emitting diodes of the group of light emitting diodes.

9. Method according to either of Claims 7 and 8,
in which all the light emitting diodes of the group of light emitting diodes signal a symbol that comprises a piece of information about a number of light emitting diodes and/or subsequences for distributed signalling of the coded symbol sequence.

10. Method according to Claim 9,
in which the diagnosis device takes the information about the number of light emitting diodes and/or subsequences for distributed signalling of the coded symbol sequence as a basis for checking complete identification of all the light emitting diodes that are used for distributed signalling of the coded symbol sequence.

11. Method according to one of Claims 7 to 10,
in which all the light emitting diodes of the group of light emitting diodes signal a symbol that comprises a piece of information about an order or significance of the subsequence signalled by the respective light emitting diode within the coded symbol sequence.

12. Method according to Claim 11,
in which the diagnosis device takes the information about the order or the significance of the respective subsequence as a basis for composing the coded symbol sequence from the signalled subsequences.

13. Method according to one of Claims 1 to 12,
in which a display unit of the diagnosis device is used to provide a selectable depiction of light emitting diodes of the infrastructure device that signal address, diagnosis and/or configuration information, and in which a light emitting diode selected on a user selection is optically scanned by means of the camera of the diagnosis device for the purpose of ascertaining the address, diagnosis and/or configuration information.

14. Method according to one of Claims 1 to 13,
in which the infrastructure device is a router, a switch, a bridge, a hub, a local peripheral of an industrial automation system or automation device with a communication network interface, a display device, an input device or a printer.

15. Method according to one of Claims 1 to 14,
in which the diagnosis device is a portable computer, a tablet PC or a smartphone.

16. Infrastructure device (12, 13, 14, 15) having
- a communication network interface,
- a memory unit for address, diagnosis and/or configuration information,
- at least one light emitting diode for signalling device or communication status information and address, diagnosis and/or configuration information as an overlaid coded symbol sequence and/or as an amplitude-modulated, frequency-modulated and/or phase-modulated overlaid signal,
wherein the infrastructure device (12, 13, 14, 15) is configured and set up to perform a method according to one of Claims 1 to 15.

17. Diagnosis device (31) having
- at least one camera for optically scanning coded symbol sequences and/or amplitude-modulated, frequency-modulated and/or phase-modulated overlaid signals,
- a computer unit for identifying and decoding coded symbol sequences and/or amplitude-modulated, frequency-modulated and/or phase-modulated overlaid signals,
wherein the diagnosis device (31) is configured and set up to perform a method according to one of Claims 1 to 15.

## Revendications

1. Procédé de transmission d'informations d'adresse, de diagnostic et/ou de configuration entre un appareil (12, 13, 14, 15) d'infrastructure raccordé à un réseau de communication et un appareil (31) de diagnostic, dans lequel
- les informations d'adresse, de diagnostic et/ou de configuration sont affectées à l'appareil d'infrastructure raccordé au réseau de communication,
- des informations de statut d'appareil ou de communication sont signalées à l'appareil d'infrastructure au moyen de plusieurs diodes électroluminescentes de l'appareil d'infrastructure,
- les informations d'adresse, de diagnostic et/ou de configuration sont signalées sous la forme d'une séquence de symbole codée superposée et/ou sous la forme d'un signal superposé modulé en amplitude, en fréquence et/ou en phase, par au moins une diode électroluminescente donnée à l'avance, supplémentairement aux informations indiquées d'appareil de statut de communication,
- les diodes électroluminescentes de l'appareil d'infrastructure sont détectées optiquement par l'appareil de diagnostic au moyen d'un appareil photographique,
- la au moins une diode électroluminescente donnée à l'avance, qui signale des informations d'adresse, de diagnostic et/ou de configuration est, à l'aide d'un codage de la séquence de symbole comprenant les informations d'adresse, de diagnostic et/ou de configuration et/ou à l'aide d'une modulation du signal superposé, identifiée par l'appareil de diagnostic,
- la au moins une diode électroluminescente identifiée est détectée optiquement au moyen de l'appareil photographique de l'appareil de diagnostic et les informations d'adresse, de diagnostic et/ou de configuration sont déterminées par l'appareil de diagnostic à partir d'une séquence de symbole codée détectée et/ou d'un signal modulé superposé.

2. Procédé suivant la revendication 1,
dans lequel la séquence de symboles codée est, par des codes de clignotement et/ou le signal modulé superposé, à l'extérieur d'un spectre de fréquence perceptible par l'oeil humain et/ou en obtenant un contenu des informations signalées d'appareil ou de statut de communication, signalée au moyen de la au moins une diode luminescente donnée à l'avance de l'appareil d'infrastructure.

3. Procédé suivant l'une des revendications 1 ou 2,
dans lequel les informations d'adresse, de diagnostic et/ou de configuration comprennent, dans un état de défaut de l'appareil d'infrastructure, une indication d'adresse, notamment un uniform ressource locator, pour l'accès à un serveur mettant à disposition des informations de diagnostic et/ou de suppression du défaut.

4. Procédé suivant l'une des revendications 1 à 3,
dans lequel les informations d'adresse, de diagnostic et/ou de configuration comprennent, pendant une mise en service de l'appareil d'infrastructure, une indication d'adresse, notamment un uniform ressource locator, pour l'accès à un serveur qui met à disposition des moyens de traitement de paramètres configurables de l'appareil d'infrastructure.

5. Procédé suivant l'une des revendications 1 à 4,
dans lequel les informations d'adresse, de diagnostic et/ou de configuration sont signalées de manière synchrone par au moins deux diodes électroluminescentes données à l'avance, sous la forme respectivement d'une séquence de symbole codée superposée et/ou d'un signal modulé superposé, et dans lequel les au moins deux diodes électroluminescentes données à l'avance, qui signalent les informations d'adresse, de diagnostic et/ou de configuration, sont identifiées à l'aide de codes de clignotement superposés synchrones ou de signaux modulés superposés.

6. Procédé suivant la revendication 5,
dans lequel les au moins deux diodes électroluminescentes données à l'avance de l'appareil d'infrastructure sont disposées en étant voisines.

7. Procédé suivant l'une des revendications 1 à 4,
dans lequel la séquence de symbole codée, comprenant les informations d'adresse, de diagnostic et/ou de configuration, a plusieurs sous-séquences, qui sont signalées chacune en cadence par toutes les diodes électroluminescentes du groupe de diodes électroluminescentes.

8. Procédé suivant l'une des revendications 7 ou 8,
dans lequel il est signalé, par toutes les diodes électroluminescentes du groupe de diodes électroluminescentes, un symbole, qui comprend une information sur un nombre de diodes électroluminescentes et/ou de sous-séquences pour la signalisation répartie de la séquence de symbole codée.

9. Procédé suivant l'une des revendications 7 ou 8,
dans lequel il est signalé, par toutes les diodes électroluminescentes du groupe de diodes électroluminescentes, un symbole, qui comprend une information sur un certain nombre de diodes électroluminescentes et/ou des sous-séquences, pour la signalisation répartie de la séquence de symboles codée.

10. Procédé suivant la revendication 9,
dans lequel l'appareil de diagnostic contrôle, à l'aide de l'information sur le nombre de diodes électroluminescentes et/ou des sous-séquences, pour la signalisation répartie de la séquence de symbole codés, une identification complète de toutes les diodes électroluminescentes, qui sont utilisées pour la signalisation répartie de la séquence de symbole codée.

11. Procédé suivant l'une des revendications 7 à 10,
dans lequel il est signalé, par toutes les diodes électroluminescentes du groupe de diodes électroluminescentes, un symbole, qui comprend une information sur la succession ou la valeur de la sous-séquence respective signalée par la diode électroluminescente respective au sein de la séquence de symbole codée.

12. Procédé suivant la revendication 11,
dans lequel l'appareil de diagnostic compose, à l'aide de l'information sur la succession ou la valeur de la sous-séquence respective, la séquence de symbole codée à partir des sous-séquences signalées.

13. Procédé suivant l'une des revendications 1 à 12,
dans lequel, sur une unité d'affichage de l'appareil de diagnostic, sont représentées, de manière pouvant être sélectionnées, des diodes électroluminescentes de l'appareil d'infrastructure, qui signalent des informations d'adresse de diagnostic et/ou de configuration et dans lequel une diode électroluminescente, sélectionnée par un choix d'utilisateur pour déterminer les informations d'adresse, de diagnostic et/ou de configuration, est détectée optiquement au moyen de l'appareil photographique de l'appareil de diagnostic.

14. Procédé suivant l'une des revendications 1 à 13,
dans lequel l'appareil d'infrastructure est un routeur, un switch, un bridge, un hub, un appareil périphérique décentralisé d'un système d'automatisation industriel ou un appareil d'automatisation ayant des interfaces de réseau de communication, un appareil d'affichage, un appareil de saisie ou une imprimante.

15. Procédé suivant l'une des revendications 1 à 14,
dans lequel l'appareil de diagnostic est un ordinateur portable, une tablette PC ou un smartphone.

16. Appareil (12, 13, 14, 15) d'infrastructure comprenant
- une interface de réseau de communication,
- une unité de mémorisation d'informations d'adresse, de diagnostic et/ou de configuration,
- au moins une diode électroluminescente pour signaler des informations de statut d'appareil ou de communication et des informations d'adresse, de diagnostic et/ou de configuration, sous la forme d'une séquence de symbole codée superposée et/ou d'un signal superposé modulé en amplitude, en fréquence et/ou en phase,
dans lequel l'appareil (12, 13, 14, 15) d'infrastructure est conformé et agencé pour effectuer un procédé suivant l'une des revendications 1 à 15.

17. Appareil (31) de diagnostic comprenant
- au moins un appareil photographique pour détecter optiquement des séquences de symbole codée et/ou des signaux superposés modulés en amplitude, en fréquence et/ou en phase,
- une unité informatique pour identifier et décoder des séquences de symbole codées et/ou des signaux superposés modulés en amplitude, en fréquence et/ou en phase,
dans lequel l'appareil (31) de diagnostic est conformé et agencé pour effectuer un procédé suivant l'une des revendications 1 à 15.
